# EUROPEAN PATENT APPLICATION

(11) **EP 3 716 249 A1**
(43) Date of publication of application: **30.09.2020**
(21) Application number: 19166310.3
(22) Date of filing: 29.03.2019
(51) Int. Cl.: G09B 19/00

(54) **A TRAINING DEVICE FOR INTERACTING WITH A USER'S REACTION TO STIMULI**

(71) Applicant: Nebula4 BVBA, 2220 Heist-op-Den Berg (BE)
(72) Inventor: Peeters, Frank, 2220 HEIST-OP-DEN-BERG (BE); Swinnen, Bram, 2220 HEIST-OP-DEN-BERG (BE)
(74) Representative: Arnold & Siedsma

(57) **Abstract**

According to an embodiment, a training device is disclosed configured to train a user's reaction to stimuli when exercising comprising an output unit to output the stimuli; and a reaction sensor comprising a proximity sensor to detect a user's presence at a proximal range of the device; and a processing unit coupled to the output unit and the reaction sensor, the processing unit configured to instruct the output unit to output a direction pointing to a subrange of the proximal range for the user to move towards; and register the user's presence at the subrange as the user's reaction CHARACTERIZED IN THAT the processing unit is further configured to instruct the output unit to output a first stimulus for stimulating the user's left cerebral hemisphere and a second stimulus for stimulating the user's right cerebral hemisphere such that the left and right cerebral hemisphere are simultaneously stimulated.

## Description

### Field of the Invention

The present invention generally relates to training devices for training or exercising a user's reaction to stimuli.

### Background of the Invention

Physical training exercises are developed for improving specific skills of athletes like strength, fast reflexes, sprint velocity, accuracy, and many more. The aim is to improve the athlete's overall performance. A very basic exercise is using coloured cones spread over a sports surface. An athlete then must follow a trajectory and must touch cones of the same colour within a predefined time limit. The level of difficulty of the exercise may be increased by performing it with an object like, for example, a football.

For further improving the difficulty and the effectiveness of the training, the cones may be replaced by more interactive ones. Such an interactive cone can change colour by led-lights and can point to a direction where an athlete preferably must move to. Through one or more interactive cones the athlete's reaction to stimuli is trained. The athlete then must move in a line of sight of the interactive cone, whereby his reaction time is measured using a reaction sensor. When a reaction is detected, the same or another cone generates a new stimulus through the led-lights. Subsequently, by minimizing the time between the generation of the consecutive stimuli through the led-lights and the detection of the athlete's reaction, the training difficulty is improved.

Such interactive cones are known in the art. For example, in EP3181202A1 a cone is disclosed comprising a plurality of indicators to generate the stimuli and a proximity sensor to detect the athlete's reaction. Different cones may also cooperate to generate a sequence of stimuli.

In US2015065273A1 another similar training device is disclosed comprising a display for displaying an instruction to an athlete like, for example, "Spin Move", "Jumpshot", or any other physical instruction. The device further comprises a sensor for detecting a presence of the athlete in a detection zone relative to the front side of the device.

Finally, in WO2009039661A1 a reaction trainer is disclosed comprising a system with a plurality of pods, each pod having an indicator and a reaction sensor. The system is configured to let communicate the different pods and to measure a reaction time between the pods while the athlete is performing physical exercises.

When training with these prior art devices and/or systems, the athlete needs to move either in the proximity of one interactive cone or pod, either between a plurality of interactive cones or pods.

A disadvantage of these existing solutions is that the exercise of physical movements either towards one pod or between interactive pods becomes monotonous and tiresome. Even when the exercise comprises randomised stimuli of instructions to move between the different pods in a system, an athlete may become conditioned in such a way that he or she performs the exercises automatically. This conditioned state of the athlete becomes even more explicit when he or she reaches advanced levels of the exercises since it precisely this conditioned state that he or she wants to reach. However, this is a drawback since the effect of the training will reduce due to the monotonous and tiresome circumstances. Ultimately this leads either to a falling-out of the athlete, or to a limit whereby no further progress in performance is established.

It is therefore an objective of the present invention to disclose a training device that overcomes the above identified shortcomings of existing solutions. More particularly, it is an objective to disclose a training device to train an athlete's reaction to stimuli that pushes an athlete further without having a risk of a fall-out out when approaching his or her limits.

### Summary of the Invention

According to a first aspect of the present invention, the above identified objective is realized by a training device configured to train a user's reaction to stimuli when exercising, the device comprising:
- an output unit configured to output the stimuli; and
- a reaction sensor comprising a proximity sensor configured to detect a user's presence at a proximal range of the device; and
- a processing unit operatively coupled to the output unit and the reaction sensor, the processing unit configured to:
   ∘ instruct the output unit to output a direction pointing to a subrange of the proximal range for the user to move towards; and
   ∘ register the user's presence at the subrange as the user's reaction;
CHARACTERIZED IN THAT
- the processing unit is further configured to instruct the output unit to output a first stimulus for stimulating the user's left cerebral hemisphere and a second stimulus for stimulating the user's right cerebral hemisphere within a predefined time interval such that the left and right cerebral hemisphere are simultaneously stimulated

The training device trains a user's reaction to stimuli. The user is, for example, an athlete who reacts on stimuli generated by the training device. Therefore, the device comprises an output unit, a reaction sensor and a processing unit. Since the processing unit is operatively coupled to the output unit and the reaction sensor, data can be exchanged, and the output unit and reaction sensor are controlled. In a primary set-up the processing unit instructs the output unit to output a direction where the user or athlete must move to. The direction where the output unit points to is within a subrange of the proximal range of the training device. In other words, the pointed direction output by the output unit is interpretable by the user to conclude where he or she is expected to move towards. Subsequently, the reaction sensor comprising a proximity sensor registers the user's presence when the user has moved to the pointed subrange.

The processing unit may instruct the output unit to output a direction in consecutive steps, this is each time the user is detected and registered by the proximity sensor, the direction varies in a randomly manner. This way, the user is trained by constantly moving towards several different directions.

At the same time when the user is instructed to move, the processing unit further instructs the output unit to generate a first and a second stimulus. The first stimulus stimulates the user's left cerebral hemisphere, while the second stimulus stimulates the user's right cerebral hemisphere.

The left cerebral hemisphere coordinates the right side of the body and performs tasks related to logic and reasoning like as in science and mathematics. The right cerebral hemisphere coordinates the left side of the body and performs tasks related to creativity and arts.

The first stimulus and second stimulus are output by the output unit such that the left and right cerebral hemispheres are simultaneously stimulated. The first and second stimuli may thus be output at the same time, or with a minor time interval in between. The minor time interval thus comprises a period small enough to achieve the effect of simultaneously stimulate both cerebral hemispheres. The predefined time interval may comprise some tenth of milliseconds or less.

An advantage of stimulating both cerebral hemispheres at the same time is that the athlete is forced to remain concentrated during the exercise. Differently formulated, the user or athlete will not be able to rely on an automatic or instinctive way of behaving. In the absence of stimuli for both cerebral hemispheres, the user could rely on the human's reptilian brain. In this occurrence an exercise as reproduced by existing solutions in the art results in an automatically performing of the exercise while after some time no more training effect will be gained anymore. This is because the user will perform the exercise automatically and instinctively.

By constantly lavishing someone with stimuli in a coordinated manner while performing physical exercises, the user is forced to remain concentrated for performing his or her movements. Each time a movement is made, the stimuli will distract his or her attention away from the physical activity. Next, after the stimuli is perceived the focus is again on the movements. Thus, the user is continuously forced to alternate his or her attention thereby avoiding that the exercise is performed automatically and instinctively. He or she thus constantly switches using the left versus the right cerebral hemisphere. Another advantage is therefore that the training will in time give rise to more connections between the left and right cerebral hemispheres. Hence, the user's limit is levered, he or she will be more balanced, and a risk of fall-out is reduced due to the variety and alternation of the training exercise.

Further, the advantage by forcing the user to remain concentrated by stimulating his or her left and right cerebral hemispheres is that the level of difficulty is levered without increasing the difficulty of the physical movements. This way, the training program remains accessible to a variety of users, thus from novice players to advanced professional athletes.

According to an embodiment, the first stimulus comprises one of the group of letters and/or numbers; and the second stimulus comprises one of a group of colours and/or shapes.

To stimulate the left cerebral hemisphere the output unit outputs letters, numbers, or a combination thereof. In accordance with the present invention, embodiments of the training device comprise as the output unit a display for displaying the stimuli. The numbers and/or letters are then displayed to the user as a stimulus for the left cerebral hemisphere. Simultaneously or within the predefined time interval, the output unit outputs as the second stimulus colours and/or shapes, likewise by the display.

Different combinations are possible to stimulate the user's left and right cerebral hemispheres simultaneously. For example, by displaying a coloured number or letter, the stimuli are output at the same time. Alternatively, a number or letter may be displayed in a neutral manner by, for example, a white number on a black background or vice versa, and immediately hereafter, this is within the predefined time interval, a coloured shape is displayed.

The right hemisphere may also be stimulated through instructing the user performing an action and/or a skill. The shape may then further comprise an instruction interpretable by the user to perform such an action and/or skill.

According to an optional embodiment, the output unit of the device further comprises an annular array of light-emitting diodes for displaying the second stimulus when comprising colours.

The annular array covers the outline or contour of the training device. This way, the second stimulus is easily observable by the user when performing the exercise. The light-emitting diodes switches between different colours such that the user is constantly stimulated. Simultaneously, on the display the first stimuli are displayed comprising numbers and/or letters.

The user may react to the first stimuli by speak out loud the displayed numbers and/or letters. Likewise, he or she may auditive describe the shape and/or colour of the second stimuli. A coach who is training the user may then verify if the user reacted well and correctly on the stimuli.

According to a preferred embodiment, the reaction sensor further comprises a microphone configured to capture a user's voice, and the processing unit is further operatively coupled to the microphone and configured to interpret the user's voice as the user's reaction, whereby the user's reaction further comprises speak out loud the displayed first stimulus, and auditive describing the displayed second stimulus.

Thus, besides having a coach providing guidance while training and verifying if the exercise is executed in a good manner, the training device itself may perform these tasks by capturing the user's reaction. This way, a user may train singly or separately. Furthermore, a group of users or athletes may train each with a device, while one personal coach provides to the group guidance without the need of constantly being present at an individual user.

To perform these tasks, the processing unit is configured to interpret expressed wordings of the user received from the microphone by, for example, computational linguistics software. The processing unit comprises, for example, a natural-language user interface, or another computer human interface configured to infer verbs and phrases. Subsequently, the words and expressions pronounced by the user are interpreted and evaluated with respect to the output stimuli.

For example, the output unit comprising the display displays a coloured number. The user then speaks out loud the number and subsequently speaks out loud the displayed colour, or vice versa. The microphone captures the user's voice and the processing unit processes the sound of the voice thereby interpreting and registering the user's reaction. Further, it relates the interpretation to the stimuli thereby determining if the user performed the exercise in a correct manner. A correct manner is then to be regarded as pronouncing the right number and correctly describing the colour, while at the same time performing the movements.

Another example is displaying the word of a colour, for example "BLACK", whereby the letters of the word are displayed in other colour than black. The user then must pronounce the wording, as well as describing the colour.

A third example is that a number, a letter or a word as a first stimulus is displayed, whereby the user pronounces the first stimulus, followed by a shape, for example a tree, whereby next the user auditive describes the shape.

The sequence of displaying the first and second stimulus may also be reversed, this is, firstly the second stimulus is displayed and next the output unit outputs the first stimulus.

It should be further understood that these examples are not exhausted, but that more example are possible to simultaneously stimulate the right and left cerebral hemisphere of the user through a combination of colours, letter, symbols, signs, and/or shapes.

The processing unit comprising the computational linguistic software may further be configured to interpret a variety of languages, such as English, Spanish, Dutch, or other languages. The user may then pronounce the stimuli by his or her mother tongue, or in another language interpretable by the processing unit. This way, the level of difficulty of the exercise may be further levered by, for example, forcing the user to pronounce the stimuli in a language other than his or her mother tongue.

Alternatively, or additionally, according to an embodiment, the first stimulus comprises sequentially displaying a sequence of numbers and the second stimulus comprises displaying per number a corresponding arithmetic operation. The user's reaction then further comprises counting the sequence of numbers according to the corresponding arithmetic operation and speak out loud a result of the counting.

The arithmetic operation comprises, for example, an addition, subtraction, multiplication, or a division. The arithmetic operation may be displayed by its corresponding operator as commonly used in mathematics. Alternatively, the arithmetic operation may also be represented by a colour, for example green for adding and red for subtracting. Moreover, the numbers may be displayed with a corresponding colour, whereby the user must perform the calculations by observing the displayed numbers and relating them to the corresponding arithmetic operation. For example, a green number seven is adding seven to the counting, while a red number five is subtracting five from the counting.

While performing the exercise, thus moving to pointed directions, the user counts the sequence of displayed numbers with each corresponding arithmetic operation, and subsequently speak out loud a result therefrom.

According to an embodiment of the invention, the training device further comprises a speaker to sound the first and/or second stimulus.

The output unit may thus also output the stimuli through one or more speakers. For example, the speakers output a number, while the display outputs an arithmetic operation. The user then performs the operation by the combined displayed and sounded stimuli. Reversely, the arithmetic operation may be represented by a sound, while the numbers are displayed.

Optionally, the second stimulus further comprises a sound for instructing the user to move towards the direction.

In other words, the direction whereto the user needs to move to may also be pronounced as an instruction. The sound then comprises, for example, "move right", "move forward", or even "jump". The reaction sensor then detects the user's reaction when moved to the pointed direction, or when the instruction is performed.

The second stimulus, according to an embodiment, further comprises an instruction for moving a user's body part and/or object to the subrange, and the proximity sensor is further configured to detect the user's body and/or object within the subrange as the user's reaction.

An instruction may then be, for example, "Move the right leg", or "Raise the left arm". The proximity sensor then registers or detects this movement.

The object may be a sports object like a ball, a stick, or a ball moved with a stick. Another instruction may be, for example, "Move the ball at the right side", or "Move the stick over the pod". Likewise, the movement is detected by the proximity sensor.

The object may also comprise a wearable, and the proximity sensor may be configured to detect the wearable such that the movement of the user is detected in an accurate manner.

According to a preferred embodiment, the processing unit is further configured to determine a user's reaction time based on the user's reaction.

Thus, each time the user reacts to the stimuli, the processing unit determines and calculates the time needed for the user to react on these stimuli. This way, the user, but also a personal coach, gets an accurate insight on his or her performance. Through this measuring of the reaction time an overview may be achieved and through a statistical processing, the user may evaluate his or her improvement over time.

The user's reaction time is, for example, measured when the movement is detected and correctly performed, the stimuli are correctly interpreted, or a combination thereof.

The reaction time may further be used by the processing unit to instruct the output unit to change the stimuli based thereon. In other words, the faster a user reacts to the stimuli, the faster the next stimuli are output by the output unit. This way, the exercise is accurately adjusted and adapted to the user performing the exercise.

According to an embodiment, the device further comprises a transceiver. The transceiver is configured to transmit and receive data with, for example, another training device, or an external device, like a tablet, a smartphone, or a computer. The transceiver may then transmit the reaction time to a smartphone, whereby through an application the user, or the personal coach, may check or verify the performance of the user. The received reaction time may further be processed by the application thereby creating a progress report.

The transceiver may further be configured to receive signals indicative for instructing the output unit. The signals are, for example, transmitted from a smartphone controlled by the personal coach who can interfere with the exercise. The transceiver is further configured to receive verbal instructions from the personal coach which are sound by the speaker of the training device. This way, the personal coach can anticipate on the spot and correcting or redirecting the user. The personal coach can further increase the difficulty of the exercise while it is still ongoing. Furthermore, this way the personal coach or trainer can also observe the training from a distance, for example at a control room, when training the user since he or she doesn't have to be physically present next to the user. This is an advantage, because this way the coach may train from a distance several users each with a training device at a same time.

The transceiver may also be configured to transmit the instruction from the output unit to a wearable device such as a headphone. The user then receives the instructions from the output unit through the headphone instead of the speaker of the training device. This way, different users, each with their own training device, may perform the exercise next to each other, for example on a sports field, without disturbing each other through undesired noise originating from the respective speakers.

The transceiver is further configured to communicate with another similar sports training device.

According to a second aspect of the invention a training system is disclosed comprising a plurality of training devices according to the first aspect of the invention, the training devices comprising a transceiver configured to communicate with each other, the training system comprising a system controller configured to coordinate the devices such that the stimuli are output in a coordinated manner, and wherein the system controller is further configured to determine through respective transceivers a spatial distance between adjacent training devices, and to deploy therefrom a trajectory over the training devices comprising a predefined length, and to instruct the training devices to consecutively output a respective direction by their respective output unit thereby showing the trajectory.

Different training devices can be combined which jointly work together. They are configured to exchange data through their respective transceiver. The exchange may be performed using standards like Bluetooth, Wi-Fi, or ZigBee. Through the exchange of data, a coordinated exercise between the different training devices spread over the sports field arises. This way, more variety in exercises is possible and the level of difficulty may further be increased.

The system controller may be incorporated in a single training device acting as a coordinating device for the other ones. Alternatively, the system controller may be external and configured to communicate with the different training devices.

The system controller will further determine the spatial distance or the relative positioning between the plurality of training devices distributed on a surface such as a sports field. Through the determination of the positioning, the distances and/or differences in height levels between the training devices are calculated. Next, based on the spatial distances between the number of devices, the system controller determines or calculates a trajectory from which the length corresponds to a predefined length. In other words, independently of the arrangement of the training devices on the surface, a trajectory with a predefined length is established. Then the output units of the different training devices will output a direction in a coordinated manner such that the user or athlete can follow this trajectory. Simultaneously, his left and right cerebral hemispheres are stimulated.

It is an advantage that a trajectory of a predefined length can be determined independently of the arrangement of the training devices, since this way a user may perform a same exercise, for example on consecutive days, without being forced to leave the devices on the surface. Differently formulated, each time the user distributes the devices on the field, he or she may do this in a randomly manner, whereas the system controller each time determines therefrom a same exercise. This way, the user may monitor his or her progress. Further, a comparison may be made with other users, for example from the same sports team. Another example is that different training systems may be deployed of a field whereby users perform an exercise by their proper system, whereby a classification may be made between the different users, since they all perform an exercise having an equal predefined length. Another advantage is that a same exercise may also be performed on a location where the available space is limited.

According to an embodiment, the second stimulus further comprises an instruction to move a user's body and/or an object between adjacent sports training devices; and wherein the proximity sensors of the adjacent sports training devices are further configured to detect a passage of the body and/or the object between adjacent sports training devices as the user's reaction.

The proximity sensors may further be configured such that adjacent sports training devices work together for detecting a passage of a body, a body part, and/or an object. The exercise then comprises an instruction to move through pass ways by the user or athlete. A pass through is then detectable by the joined detection of adjacent proximity sensors.

According to an embodiment, the system controller is further configured to output through one or more output units of one or more training devices an arithmetic operation; and wherein an output unit of a training device is configured to output a solution of the arithmetic operation; and wherein the user's reaction comprises approaching the training device outputting the solution.

In other words, through the system controller a variety of exercises may be implemented similar to the exercises of a single training device.

According to an embodiment, the controller is further configured to retrieve a global positioning of the training system, and to normalize therefrom the predefined length based on the global positioning.

The global positioning is, for example, retrieved from a global positioning system, GPS, module or another positioning system such as Galileo with a corresponding module. The module may be present in one of the devices or may be an external module configured to communicate with the system controller. Through the determination of the global positioning, the system controller may, besides the location, determine other parameters, such as the height above sea level and/or atmospheric pressure. The retrieving of the global position may also comprise directly retrieving the height above sea level through, for example, an altimeter, and/or retrieving the atmospheric pressure through a barometer.

Based on the global positioning, in case combined with the height above sea level and/or atmospheric pressure, the predefined length is normalized. In other words, the location and related conditions are considered in terms of difficulty and/or demanded effort. At higher levels, the air may comprise less oxygen such that performing exercises at these higher levels may demand more effort compared to an exercise having the same length at locations near sea level. Thus, be normalizing the predefined length, a same exercise may thus be shorter at higher levels and longer at location near the sea level. This way, the user may monitor his progress since the external conditions where the exercise is performed are considered.

According to an embodiment, the system controller is further configured to retrieve meteorological conditions at the training system, and to further normalize the predefined length based on the meteorological conditions.

Besides the global positioning and related atmospheric conditions, the meteorological conditions may be considered as well. The system controller may, for example, retrieve these conditions from the Internet, whereby the location is linked to an application configured to determine weather conditions at the position of the training system. Alternatively, a module is used configured to determine the atmospheric humidity, temperature and/or rainfall intensity. The module may either be incorporated in one of the training devices or be external and configured to communicate with the system controller. Finally, by considering the meteorological conditions, the predefined length may further be normalized. This way, the user may monitor his or her progress over time whereby a multitude of external parameters are considered.

According to a third aspect, the invention relates to method for training a user's reaction to stimuli when exercising, the method comprising the steps of:
- instructing an output unit to output a direction pointing to a subrange of a proximal range of the device for the user to move towards; and
- detecting by a reaction sensor comprising a proximity sensor a user's presence at the subrange; and
CHARACTERIZED IN THAT
the method further comprises the step of:
- instructing the output unit to output a first stimulus for stimulating the user's left cerebral hemisphere and a second stimulus for stimulating the user's right cerebral hemisphere within a predefined time interval such that the left and right cerebral hemisphere are simultaneously stimulated.

According to an embodiment, the method further comprises the steps of:
- instructing an output unit of a second training device such that the stimuli are output through the output unit of the first and second training device in a coordinated manner; and
- determining through respective transceivers of the training devices a spatial distance between the devices; and
- deploying therefrom a trajectory over the training devices comprising a predefined length; and
- instructing the training devices to consecutively output a respective direction by their respective output unit thereby showing the trajectory.

### Brief Description of the Drawings

Some example embodiments will now be described with reference to the accompanying drawings.
Fig. 1 illustrates a trimetric view of a training device according to an embodiment of the invention; and
Fig. 2 illustrates a top view of the training device illustrated in Fig. 1; and
Fig. 3 illustrates a bottom view of the training device illustrated in Fig. 1; and
Fig. 4 illustrates a side view of the training device illustrated in Fig. 1; and
Fig. 5 illustrates a training system according to an embodiment of the invention; and
Fig. 6 illustrates two training devices configured to detect a passage of a body and/or object in between them; and
Fig. 7 illustrates training devices randomly distributed over a surface.

### Detailed Description of Embodiment(s)

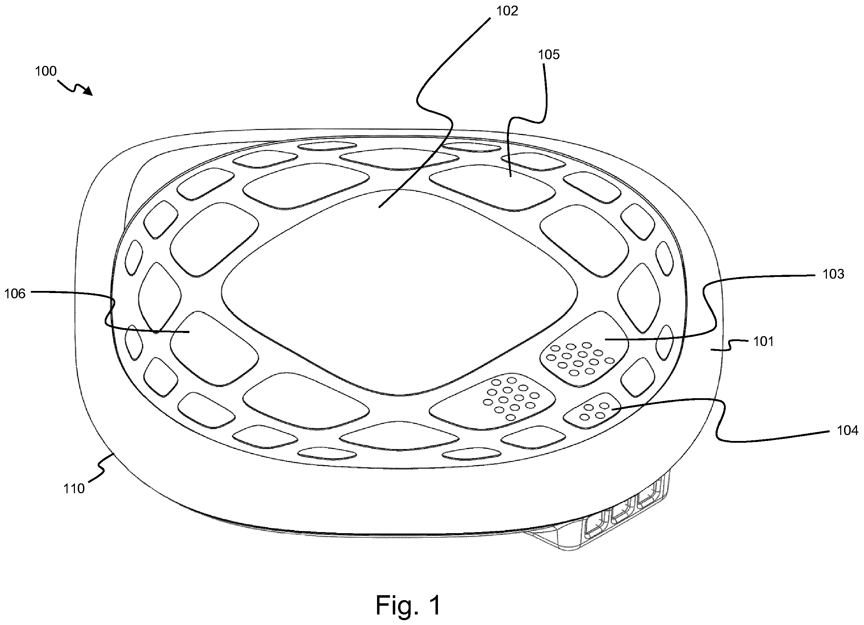

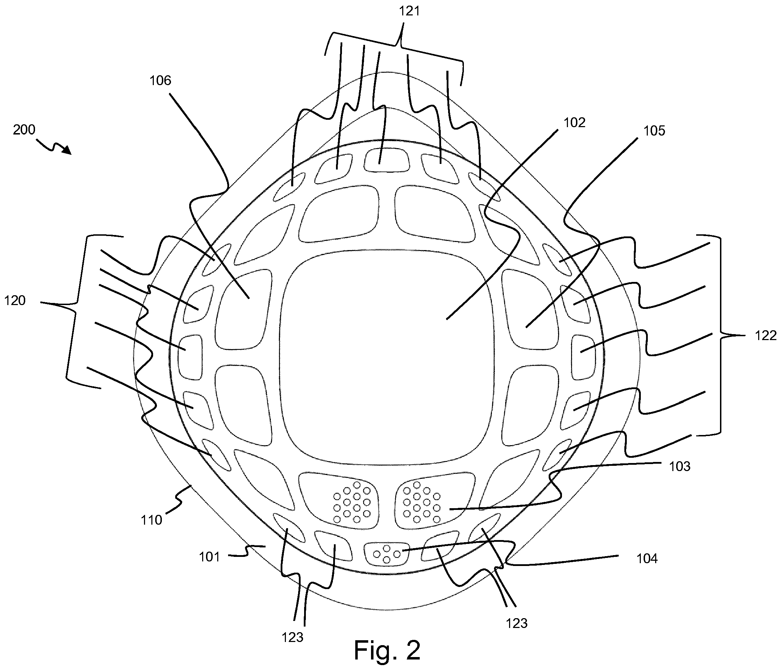

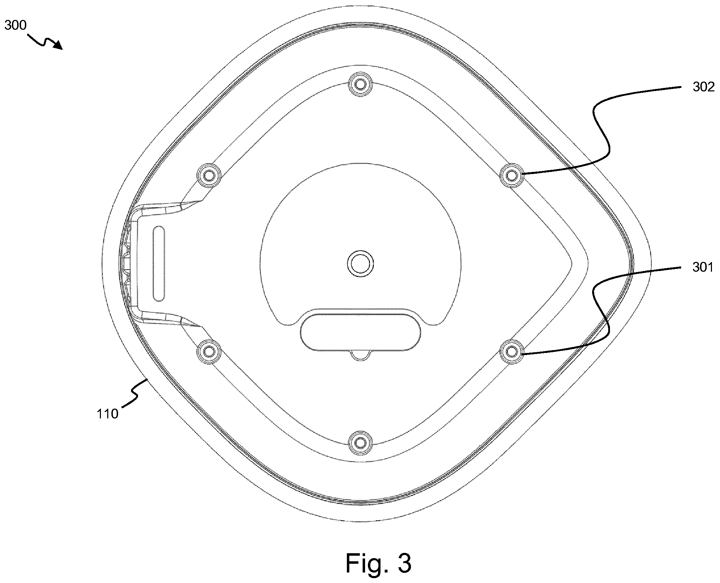

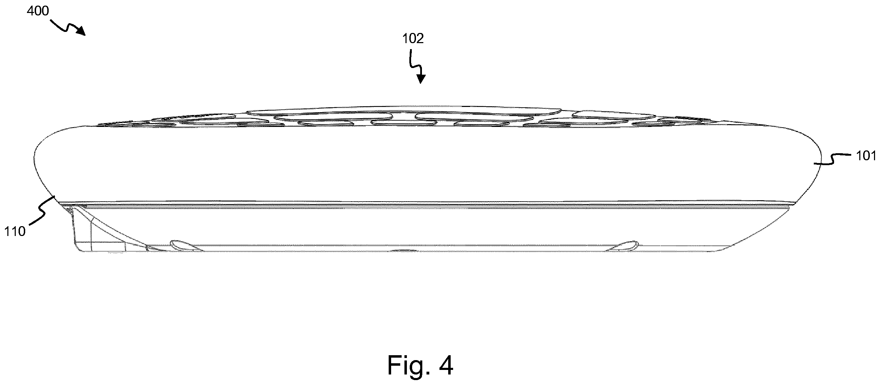

In Fig. 1 a trimetric view 100 of a training device 110 according to an embodiment of the invention is illustrated. The training device 110 is further illustrated in Fig. 2, wherein a top view is 200 shown of the training device 110, a bottom view 300 shown in Fig. 3, and a side view 400 shown in Fig. 4.

The illustrated training device 110 comprises an annular array of light-emitting diodes 101, a display 102, a speaker 103, a microphone 104, and proximity sensors 105 and 106.

The annular array of light-emitting diodes 101, the display 102, and the speaker 103 constitute the output unit of the training device 110.

The proximity sensors 105, 106, and the microphone 104 constitute the reaction sensor of the training device 110.

The training device 110 further comprises a processing unit operatively coupled to the annular array of light-emitting diodes 101, the display 102, the speaker 103, the microphone 104, and the proximity sensors 105 and 106.

The processing unit is configured to instruct the output unit to output first and second stimuli. The first stimuli comprise letters and/or numbers, while the second stimuli comprise colours and/or shapes. These stimuli can be output by one of the components of the output unit, thus by the light-emitting diodes 101, the display 102, and the speaker 103 when suitable to represent one of the stimuli. These stimuli are output in such a way that they are observable and perceptible by a user such as a sports athlete. The training device 110 is thus, for example, placed on a sports field whereby the output unit is faced upwards. The bottom of the training device 110 as illustrated by the view 300 in Fig. 3 is placed on the surface of the sports field. Thereto, the training device 110 comprises supports, such as 301, 302, which are distributed over the bottom surface such that the training device can be placed on the sports surface in a secure and stable manner. The supports may, for example, comprise a screw and/or click system configured to be joint or linked with other connection systems like Velcro, magnetic connections, a hook, or any other gripping system.

The first stimulus when output stimulates the athlete's left cerebral hemisphere, while the second stimulus when output stimulates the athlete's right cerebral hemisphere. Further, the processing unit is configured to instruct the output unit to output the stimuli such that both cerebral hemispheres are simultaneously stimulated. Some illustrative examples thereof will now be described.

The annular array of light-emitting diodes 101 is configured to emit light in different colours. Besides, the display 102 comprises, for example, a liquid crystal display, or a dot-matrix display configured to display numbers. To stimulate both the cerebral hemispheres, the annular array 101 appears in a colour and simultaneously a number is displayed on the display 102. For example, the annular array 101 appears in green, while a number "8" is displayed. The displayed number is, for example, displayed by white dots on a black background or vice versa. The green colour stimulates the athlete's right cerebral hemisphere, while the number stimulates the athlete's left cerebral hemisphere.

At the same time while the cerebral hemispheres are stimulated, the training device 110 instructs the athlete to move to a specified direction. The direction is within a subrange of the proximal range of the training device 101. This is illustrated in Fig. 2 by subranges 120, 121, 122 and 123, which each comprises a group of light-emitting diodes. To instruct the athlete to move to a direction, for example to the right side with reference to Fig. 2, the light-emitting diodes 122 lights up. Subsequently, when the athlete moves to that direction, the proximity sensors 105, 106, detect the presence of the athlete at that subrange 122. Alternatively, the pointed direction may be represented by the display 102 which, besides the number, displays an arrow pointing to a subrange. Another possibility is that the annular array 101 is segmented such that a segment lights up in another colour and/or intensity compared to other segments. The segment lighting up in another colour and/or intensity then points to the direction.

Thus, the number "8" is displayed, the annular array lights up in a green colour, and subrange 122 points to the right side of the training device 110. The athlete is thus instructed to move to the right side, while his or her cerebral hemispheres are simultaneously stimulated by the number "8" and the green colour. Further, different features or options are possible.

A first option is that the athlete pronounces the displayed number and describes the colour. The athlete may thus pronounce "eight" followed by "green", or vice versa. Another option is that he or she describes the two stimuli simultaneously by pronouncing "a green eight".

The first stimulus may further comprise letters. The display may, for example, display 102 the wording "red", while the annular array 101 still lights up in green. The athlete then pronounces "red" followed by "green", or vice versa, while moving to the pointed direction.

Another possibility is that the display 102 itself outputs the first and the second stimuli. For example, the display 102 displays the word "green", whereby the letters are displayed in a red colour. The athlete then must pronounce "green" followed by "red" or vice versa.

Another option is that the display 102 outputs letters of a word in a random manner, whereby the athlete must make a word out of the letters. At the same time, he or she must move to the pointed direction. For example, the letters "SEOHU", wherefrom the athlete may derive the word "HOUSE". Combined with the green annular array 101, the athlete may then pronounce "a green house". Alternatively, the display 102 may also displays shapes, for example for a house. A same reaction may then be expected from the athlete, namely pronouncing "a green house".

The colour displayed by either the annular array 101 or the display 102 may also represent an arithmetic operation, like an addition or a subtraction. For example, a green colour represents an addition, while a red colour represents a subtraction. To stimulate the athlete's cerebral hemispheres, he or she must perform the calculation represented by the operators combined with the numbers in a consecutive manner. In an initiation step a first number is displayed, while the annular array 101 doesn't light up. For example, the display 102 displays the number "2" in a white or yellow colour. Next, when the athlete has moved to the pointed direction, the display 102 display the number "5" and the annular array 101 lights up in green. The athlete then must pronounce "7", which is the result of the addition of "2" with "5". Subsequently, a new direction is pointed, while the display 102 displays "3" and the annular array lights up in red. The athlete then must pronounce "4" which is the result of the subtraction of "7" with "3". Alternatively, the colour may also be represented by the display itself, thus with a green coloured "5", and a red coloured "3".

The illustrated training device 110 is further configured to capture the voice of the athlete. When the athlete pronounces the words, describes the colours, and/or says the results of the calculation as highlighted, the microphone 104 captures this. Next, the processing unit interprets the captured voice, and base thereon the correctness thereof is determined. Next, the athlete's reaction time is determined as well. This may be performed in different manners. For example, the reaction time is determined based on the correctness of the athlete's reaction as determined by interpreting his or her voice. This is further combined with the detected movement of the athlete to the pointed direction. Thus, his or her reaction time corresponds to the time between the instant that the stimuli and/or direction is output, and the instant when the athlete has pronounced correctly the output stimuli and/or calculations and has interact with the training device by moving to the pointed direction. The reaction time may also be determined independently of the correctness of the reaction. Thus, when a reaction is captured, the reaction time is determined and, optionally, it is indicated if the reaction was correct or not. Further, when a reaction is captured, the processing unit of the training device 110 instructs the output unit to change the pointed direction and the change the stimuli.

Each consecutive determined reaction time may further be registered by the training device 110 in an internal memory storage and/or transmitted to an external device such as a smartphone or a tablet. The registered reaction times may then be used for further processing, such as evaluating the athlete's performance over time, or for comparison with other athletes.

The determined reaction time may also be used by the processing unit to vary the time within which the stimuli are displayed. For example, when the athlete reacts in a fast and correct manner, the stimuli will only shortly by displayed. Therefore, the difficulty of the exercise increases thereby challenging the athlete.

Instead of the athlete using the training device 110 on a sports field, the training device 110 may also be used in a revalidation process. For example, in hospitals and/or revalidation centres patients may be trained by the training device 110 in a similar manner at the sports athlete, whereby the exercises in terms of time between the consecutive displayed stimuli and directions are adapted to the patient abilities and/or skills. Likewise, the training device 110 is further suitable for using it in schools for children suffering from concentration and/or learning problems or disorders, and/or preventing problems relating to aging. Another possibility is that the training device is used at the army for training soldiers. The soldiers may be trained in such a way that be become more alert to situations which are potentially risky. Through the training of the cerebral hemisphere, they will be able to react to risky situations by remaining calm.

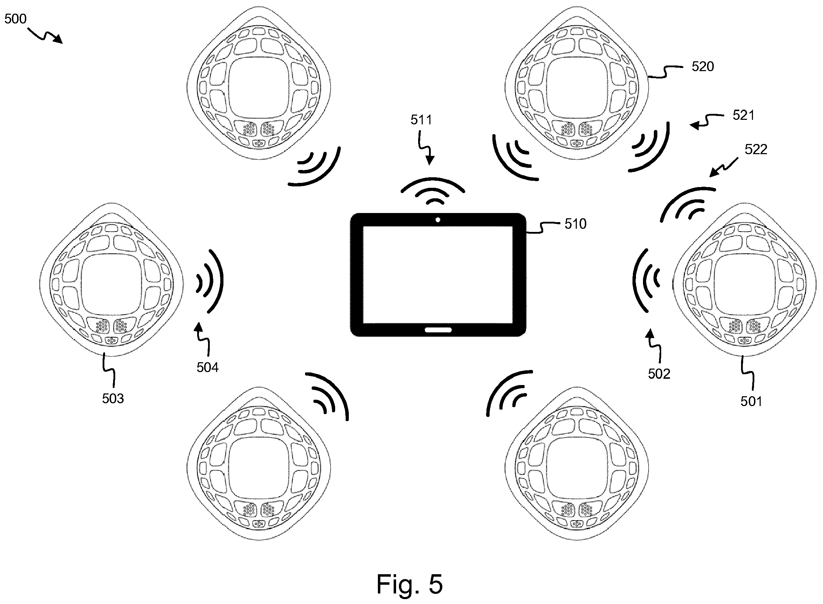

To further improve the interactivity and/or difficulty of the exercises, several training devices may be combined. This is illustrated in Fig. 5 which represents a training system according to an embodiment of the invention. The set-up illustrated in Fig. 5 comprises six training devices, such as training device 501 and training device 503. The training devices further comprise a transceiver configured to communicate with other training devices. This is illustrated by training devices 501 and 520 which may communicate 521, 522 with each other without an intervention of the tablet 510. The communication may be wired or wirelessly 502, 504. The training devices are placed in either a predefined pattern, either in a randomly manner.

The training system 500 is configured to display the first and second stimuli on one of the training devices in a coordinated manner. Further, the pointed direction may be represented by the annular array of one of the training devices indicating that the athlete must move to the training device wherefrom the annular array is light up. When the athlete has approached this latter training device, the annular array of another second training device lights up instructing the athlete to move to this second training device. The alternation between the different training devices may be instructed externally, for example by a tablet 510. The tablet 510 is thus likewise configured to communicate 511 with the training devices. Further, reaction times determined by the devices may be displayed on the tablet 510.

While moving between the different training devices, the athlete's cerebral hemispheres are continuously stimulated. Thereto, different options are possible. For example, the training device wherefrom the annular array is light up displays also a number in a colour, such as green or red. Likewise with a single training device, the athlete must perform the calculations with the displayed numbers and corresponding arithmetic operations represented by the green or red colour. Another option is that the training device wherefrom the annular array is light up displays a letter with its display. The athlete then must memorize the letters wherefrom a word may be formed. When all the letters of the word are displayed, one of the training devices sounds a beep with its speaker to instruct the athlete to form the word and to pronounce it. The voice is then captured by a microphone of one of the training devices.

The training devices in the set-up 500 may further be configured to interact with each other such that the athlete must follow a predefined route or path with one of the training devices as an endpoint. Each time the athlete performs the movements combined with the calculation in a correct manner, he or she advances to the endpoint. On the contrary, when an incorrect movement is executed, and/or a wrong calculation is made, the training devices interact thereby extending the trajectory or even changing it. The athlete will then need more time to advance to the endpoint or will end up at another endpoint. Another possibility is that an athlete making too much errors will be forced to end his or her exercise.

Also, as a challenge between different athletes, several set-ups comprising training devices may be placed on the sports field. Next, the athletes start at the same time each at their proper set-up. Finally, the first athlete reaching his or her endpoint wins the challenge. Another example is that a trajectory continues if an athlete doesn't make any mistakes. This way, the athlete reaching the most distant or covers the longest trajectory performs in the best manner. The personal coach will then in a straightforward manner notice the best performing athlete.

The coordination between the different training devices in the set up 500 may be performed by the tablet 511, or another device configured to exchange data with the training devices, such as a smartphone or a computer.

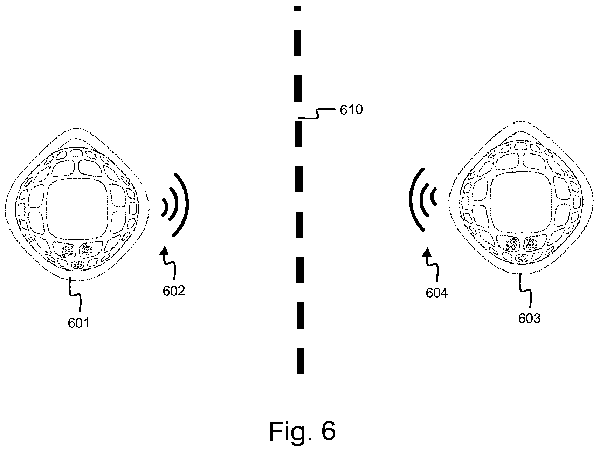

Two training devices may also be configured to detect a passage of an athlete and/or an object between them. This is illustrated in Fig. 6 wherein two training devices 601 and 603 are illustrated. The training devices 601, 603 wirelessly 602, 604 exchange data captured from their respective reaction sensor to detect a passage in between them 610. The athlete may then by instructed to move between 610 to two training devices 601, 603, for example by simultaneously lighting up their respective annular arrays.

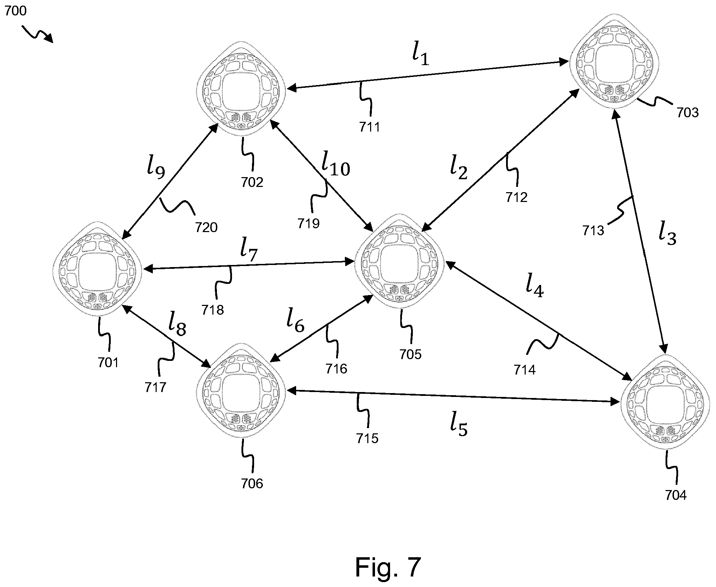

As illustrated in Fig. 7, the training devices 701-706 may also be distributed on a surface in a randomly manner. The system controller is further configured to determine the spatial distances 711-720 between the different devices 701-706. This is, for example, performed by the respective transceivers configured to send and receive data wherefrom the distances 711-720 may be derived. Next, based on these distances, the system controller determines an exercise comprising a predefined length. For example, the exercise comprises moving from device 701 to device 702, to device 705 and back to device 701. The length of the exercise will then be *l*₉ + *l*₁₀ + *l*₇. More combinations of lengths between the devices 711-720 are also possible. The length of the exercise may further be normalized by considering atmospheric and/or meteorological conditions present at the location of the training system 700. The system controller retrieves the location of the system 700 through, for example, a GPS module. Additionally, based on the location, the system controller may retrieve the weather condition at that location via an application running on the Internet. Alternatively, a weather station may be used to determine the meteorological conditions. Next, based on the atmospheric and/or meteorological conditions, the length of the exercise may be adapted by making it longer or shorter. Additionally, the system controller may likewise normalize a time wherein the user or athlete must perform the exercise. The mapped trajectory will then be followed until a predefined time interval is terminated. The performance of the user or athlete may then be derived based on the length of the covered distance over the trajectory. Based on the atmospheric and/or meteorological conditions, the time may likewise be shortened or lengthened such that each time the user performs the exercise, he or she may monitor his or her improvement in performance.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A training device (100) configured to train a user's reaction to stimuli when exercising, the device comprising:
- an output unit (120-123) configured to output the stimuli; and
- a reaction sensor (105, 106) comprising a proximity sensor configured to detect a user's presence at a proximal range of the device (100); and
- a processing unit operatively coupled to the output unit (120-123) and the reaction sensor (105, 106), the processing unit configured to:
∘ instruct the output unit (120-123) to output a direction pointing to a subrange of the proximal range for the user to move towards; and
∘ register the user's presence at the subrange as the user's reaction;
**CHARACTERIZED IN THAT**
the processing unit is further configured to instruct the output unit to output a first stimulus for stimulating the user's left cerebral hemisphere and a second stimulus for stimulating the user's right cerebral hemisphere within a predefined time interval such that the left and right cerebral hemisphere are simultaneously stimulated.

2. The training device (100) according to claim 1, wherein:
- the first stimulus comprises one of the group of letters and/or numbers; and
- the second stimulus comprises one of the group of colours and/or shapes.

3. The training device (100) according to one of the preceding claims, wherein the output unit (120-123) comprises a display (102) for displaying the first and/or second stimulus.

4. The training device (100) according to one of the claims 2 to 3, wherein the output unit (120-123) further comprises an annular array of light-emitting diodes (101) for displaying the second stimulus when comprising colours.

5. The training device (100) according to claim one of the claims 3 to 4, wherein the reaction sensor (105, 106) further comprises a microphone (104) configured to capture a user's voice; and wherein the processing unit is further operatively coupled to the microphone (104) and configured to interpret the user's voice as the user's reaction; and wherein the user's reaction further comprises:
- speak out loud the displayed first stimulus; and
- auditive describing the displayed second stimulus.

6. The training device (100) according to claim one of the claims 3 to 4, wherein the reaction sensor (105, 106) further comprises a microphone (104) configured to capture a user's voice; and wherein the processing is further operatively coupled to the microphone (104) and configured to interpret the user's voice as the user's reaction; and wherein, when the first stimulus comprises sequentially displaying a sequence of numbers and the second stimulus comprises displaying per number a corresponding arithmetic operation, the user's reaction further comprises:
- counting the sequence of numbers according to the corresponding arithmetic operation; and
- speak out loud a result of the counting.

7. The training device (100) according to one of the preceding claims, wherein the output unit (120, 123) further comprises a speaker (103) to sound the first stimulus and/or second stimulus.

8. The training device (100) according to one of the preceding claims, wherein the second stimulus further comprises an instruction for moving a user's body part and/or object to the subrange; and wherein the proximity sensor (105, 106) is further configured to detect the user's body part and/or object within the subrange range as the user's reaction.

9. The training device (100) according to one of the preceding claims, wherein the processing unit is further configured to determine a user's reaction time based on the user's reaction.

10. The training device (100) according to claim 9, wherein the processing unit is further configured to instruct the output unit to change the stimuli based on the reaction time.

11. The training device (100) according to one of the claims 9 to 10, the device further comprising a transceiver configured to transmit the user's reaction time, and further configured to receive signals indicative for instructing the output unit, and/or to communicate with another similar sports training device.

12. A training system (500, 700) comprising a plurality of training devices (501, 502, 520, 701-706) according to claim 11, the system comprising a system controller configured to coordinate the devices (501, 502, 520, 701-706) such that the stimuli are output in a coordinated manner; and wherein the system controller is further configured to determine through respective transceivers a spatial distance between adjacent training devices; and to deploy therefrom a trajectory over the training devices comprising a predefined length; and to instruct the training devices to consecutively output a respective direction by their respective output unit thereby showing the trajectory.

13. The training system (500, 700) according to claim 12, wherein the system controller is further configured to retrieve a global positioning of the training system; and to normalize the predefined length based on the global positioning.

14. The training system (500, 700) according to claim 13, wherein the system controller is further configured to retrieve meteorological conditions at the training system; and to further normalize the predefined length based on the meteorological conditions.

15. A method for training a user's reaction to stimuli when exercising, the method comprising the steps of:
- instructing an output unit of a first training device to output a direction pointing to a subrange of a proximal range of the device for the user to move towards; and
- detecting by a reaction sensor of the training device comprising a proximity sensor a user's presence at the subrange; and
**CHARACTERIZED IN THAT**
the method further comprises the step of:
instructing the output unit to output a first stimulus for stimulating the user's left cerebral hemisphere and a second stimulus for stimulating the user's right cerebral hemisphere within a predefined time interval such that the left and right cerebral hemisphere are simultaneously stimulated.

16. The method according to claim 15, further comprising the steps of:
- instructing an output unit of a second training device such that the stimuli are output through the output units of the first and second training device in a coordinated manner; and
- determining through respective transceivers of the training devices a spatial distance between the devices; and
- deploying therefrom a trajectory over the training devices comprising a predefined length; and
- instructing the training devices to consecutively output a respective direction by their respective output unit thereby showing the trajectory.
